# EUROPEAN PATENT APPLICATION

(11) **EP 4 744 799 A1**
(43) Date of publication of application: **20.05.2026**
(21) Application number: 24842801.3
(22) Date of filing: 07.05.2024
(51) Int. Cl.: B21D 51/44, B21D 43/00, B21D 43/20, B21D 51/46

(54) **CAN LID MANUFACTURING DEVICE, CAN LID MANUFACTURING METHOD, CAN LID, AND CAN CONTAINER CONTAINING CONTENTS**

(30) Priority: 14.07.2023 JP 2023115932
(71) Applicant: Toyo Seikan Co., Ltd., Tokyo 141-8640 (JP)
(72) Inventor: ENDO, Kouhei, Yokohama-shi, Kanagawa 230-0001 (JP); NAKAMURA, Tatsuya, Yokohama-shi, Kanagawa 230-0001 (JP); MIYATA, Kazuyuki, Yokohama-shi, Kanagawa 230-0001 (JP); MORI, Takuya, Yokohama-shi, Kanagawa 230-0001 (JP); FUKUDA, Keita, Yokohama-shi, Kanagawa 230-0001 (JP); MATSUBARA, Haruka, Yokohama-shi, Kanagawa 230-0001 (JP)
(74) Representative: Pestalozzi, Deborah
(86) International application number: PCT/JP2024/016984
(87) International publication number: WO 2025/018001

(57) **Abstract**

[Problem to Be Solved] To provide a can lid manufacturing device, a can lid manufacturing method, a can lid, and a can container containing contents that improve openability and pressure resistance of the can lid with a simple configuration. [Solution] A can lid manufacturing device (10) is configured to manufacture a can lid (L), the can lid manufacturing device (10) including: a rolling direction detection unit (50) including a rotation drive unit (51) configured to rotate the can lid (L) and a reflected light detection unit (52); and
a control unit. The reflected light detection unit (52) includes a light-emitting unit (52a) and a light-receiving unit (52b), and the control unit is configured to detect the rolling direction of the can lid (L) based on change information on a change in light intensity of the reflected light reflected by the can lid (L) to rotate, the information being obtained by the rolling direction detection unit (50).

## Description

### Technical Field

The present invention relates to a can lid manufacturing device, a can lid manufacturing method, a can lid, and a can container containing contents.

### Background Art

Conventionally, it is generally known that a metal can container is used as a container for storing contents such as a beverage (for example, see Patent Document 1), and it is also well known that a can lid constituting such a can container is formed of a rolled metal plate formed by rolling.

### Citation List

### Patent Literature

Patent Document 1: JP 4239039 B

### Summary of Invention

### Technical Problem

However, it has been found that, in a can lid formed from such a rolled metal plate, the relationship between a rolling direction of the can lid (i.e., direction in which roll lines formed in the rolled metal plate extend) and a direction in which a score or the like is formed in the can lid affects openability (i.e., force required to break the score) and pressure resistance of the can lid.

An object of the present invention is thus to provide a can lid manufacturing device, a can lid manufacturing method, a can lid, and a can container containing contents that improve openability and pressure resistance of the can lid with a simple configuration.

### Solution to Problem

A can lid manufacturing device according to the present invention is a can lid manufacturing device configured to manufacture a can lid, the can lid manufacturing device including: a rolling direction detection unit including a rotation drive unit configured to rotate the can lid and a reflected light detection unit; and a control unit. The reflected light detection unit includes a light-emitting unit configured to irradiate the can lid with irradiation light, and a light-receiving unit configured to receive reflected light reflected by the can lid of the irradiation light, and the control unit is configured to detect a rolling direction of the can lid based on change information on a change in light intensity of the reflected light reflected by the can lid to rotate, the change information being obtained by the rolling direction detection unit.

A can lid manufacturing method according to the present invention is a can lid manufacturing method for manufacturing a can lid, the can lid manufacturing method including: a rolling direction detection unit including a rotation drive unit configured to rotate the can lid and a reflected light detection unit; and a control unit. The reflected light detection unit includes a light-emitting unit configured to irradiate the can lid with irradiation light, and a light-receiving unit configured to receive reflected light reflected by the can lid of the irradiation light, and the control unit detects the rolling direction of the can lid based on change information on a change in light intensity of the reflected light reflected by the can lid to rotate, the change information being obtained by the rolling direction detection unit.

In the above can lid manufacturing device (or the can lid manufacturing method), the rolling direction detection unit may further include a rotational position adjusting unit configured to adjust a rotational position of the can lid based on rolling direction information of the can lid, which is obtained by the control unit.

In any one of the above can lid manufacturing devices (or the can lid manufacturing methods), the rotation drive unit and the rotational position adjusting unit may be formed of identical equipment configured to rotate the can lid.

In any one of the above can lid manufacturing devices (or the can lid manufacturing methods), a can lid feeder configured to feed a can lid onto a conveying conveyor may be further provided. The can lid feeder may include a can lid storage unit in which a plurality of can lids are stored in a stacked state, a can lid temporary retaining portion which is formed on a lower side of the can lid storage unit and in which one can lid is retained, an upper side feeding portion configured to feed the can lid stored in the can lid storage unit to the can lid temporary retaining portion, and a lower side feeding portion configured to feed the can lid retained in the can lid temporary retaining portion toward the conveying conveyor. The rolling direction detection unit may be installed to detect the reflected light with respect to the can lid retained in the can lid temporary retaining portion.

In any one of the above can lid manufacturing devices (or the can lid manufacturing methods), the can lid feeder may include a transfer rotating body rotatable about a vertical axis. The transfer rotating body may include, on an outer peripheral surface, an upper side engagement portion engageable with the can lid and a lower side engagement portion engageable with the can lid formed on a lower side of the upper side engagement portion. The upper side engagement portion may function as the upper side feeding portion configured to feed the can lid stored in the can lid storage unit to the can lid temporary retaining portion in accordance with rotation of the transfer rotating body, and the lower side engagement portion may function as the lower side feeding portion configured to feed the can lid retained in the can lid temporary retaining portion toward the conveying conveyor in accordance with rotation of the transfer rotating body.

In any one of the above can lid manufacturing devices (or the can lid manufacturing methods), the can lid temporary retaining portion may be formed of an outer peripheral recessed portion recessed in an outer peripheral surface of the transfer rotating body in a region between the upper side engagement portion and the lower side engagement portion.

In any one of the above can lid manufacturing devices (or the can lid manufacturing methods), the rolling direction detection unit may further include a rotational position adjusting unit configured to adjust a rotational position of the can lid based on rolling direction information of the can lid, which is obtained by the control unit. The rotational position adjusting unit may be configured to start adjustment of the rotational position of the can lid at least in the can lid temporary retaining portion.

In any one of the above can lid manufacturing devices (or the can lid manufacturing methods), the rotational position adjusting unit may be configured to adjust the rotational position of the can lid to a predetermined rotational position with an accuracy within ± 10°.

In any one of the above can lid manufacturing devices (or the can lid manufacturing methods), the light-emitting unit of the reflected light detection unit may be installed to apply irradiation light to a chuck wall portion of the can lid from an outer peripheral side.

In any one of the above can lid manufacturing devices (or the can lid manufacturing methods), an inspection machine may be further provided, the inspection machine being installed on a downstream side of the rolling direction detection unit and configured to detect an orientation of the rolling direction of the can lid with respect to a conveying direction of the can lid.

The can lid according to the present invention is manufactured by any one of the above can lid manufacturing devices (or the can lid manufacturing methods), thereby solving the above problem.

In the can lid according to the present invention, the can lid may include a center panel portion. At least one plate material deformed portion obtained by deforming a plate material in a thickness direction may be formed in the center panel portion. The center panel portion may include a narrow width portion that is a portion in which a distance between the plate material deformed portion and an outer edge of the center panel portion is narrowest among portions between the at least one plate material deformed portion and the outer edge of the center panel portion. The can lid may be formed such that an imaginary line passing through the narrow width portion and a center of the center panel portion is parallel or substantially parallel to the rolling direction.

A can container containing contents according to the present invention includes the can lid and a can barrel in which contents are filled and to which the can lid is seamed, thereby solving the above problem.

### Advantageous Effects of Invention

According to the present invention, openability and pressure resistance of the can lid can be improved with a simple configuration.

### Brief Description of Drawings

FIG. 1 is an explanatory diagram illustrating a can lid manufacturing device according to an embodiment of the present invention.
FIG. 2 is an explanatory diagram illustrating the can lid manufacturing device according to an embodiment of the present invention as viewed from the side.
FIG. 3 is an explanatory diagram illustrating a peripheral configuration of a can lid temporary retaining portion.
FIG. 4 is an explanatory diagram illustrating the peripheral configuration of the can lid temporary retaining portion as viewed from the side.
FIG. 5 is an explanatory diagram illustrating a modified example.
FIG. 6 is an explanatory diagram illustrating an example of a can lid.
FIG. 7 is a graph showing changes in light intensity of detected reflected light.

### Description of Embodiments

A can lid manufacturing device 10 and a can lid manufacturing method according to an embodiment of the present invention will be described below with reference to the drawings. Can Lid

First, a can lid L manufactured by the can lid manufacturing device 10 and the can lid manufacturing method is made of a rolled metal plate formed by rolling an aluminum alloy or the like, and is seamed to a mouth portion of a metal can barrel (not illustrated) in a state where the inside is filled with contents at the time of manufacturing a can container containing contents.

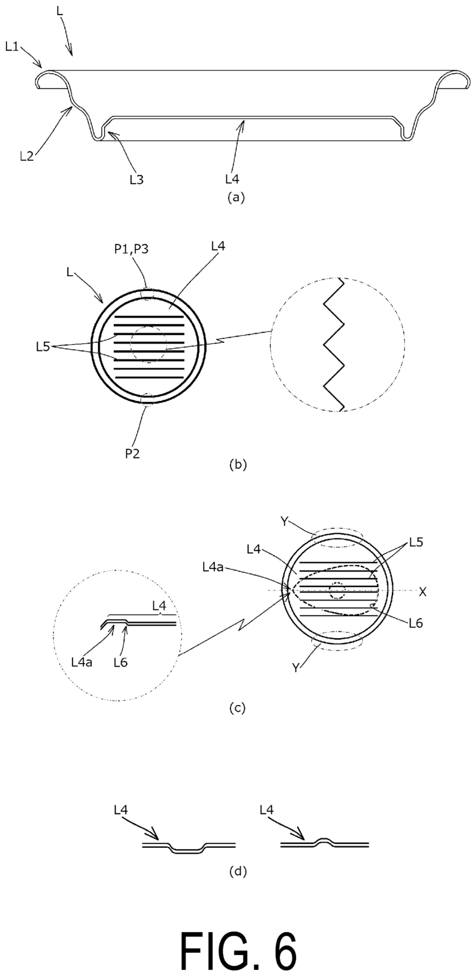

As illustrated in FIG. 6, the can lid L includes an outer peripheral side curled portion L1, a chuck wall portion L2 formed on an inner peripheral side of the outer peripheral side curled portion L1, a center panel portion L4 located on an upper side of an inner peripheral end edge of the chuck wall portion L2 on an inner peripheral side of the chuck wall portion L2, and a panel wall portion L3 connecting the chuck wall portion L2 and the center panel portion L4. Each of the portions L1, L2, and L3 of the can lid L is formed in an annular shape (annular circular shape).

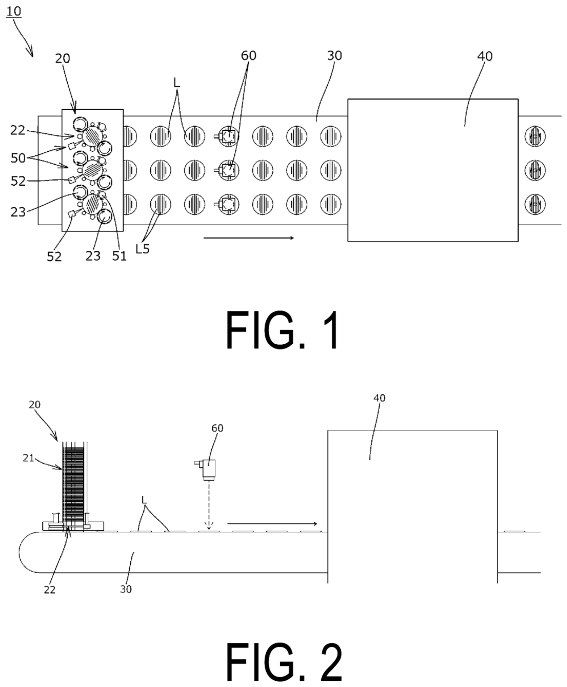

As illustrated in FIGS. 1 and 6(c), a groove-shaped score (not illustrated) that functions as a weakened portion when the can lid L is opened, a rivet (not illustrated) for fixing a tab to the center panel portion L4, and an outer peripheral side stepped portion L6 formed so as to surround the score (not illustrated) are formed in the center panel portion L4.

As illustrated in FIG. 6(c), the outer peripheral side stepped portion L6 is a portion in which a plate material of the center panel portion L4 in the thickness direction is deformed so that an inner peripheral portion (recess panel) of the outer peripheral side stepped portion L6 is lowered by one step than an outer peripheral portion thereof.

The can lid L in a state where the score (not illustrated), the rivet (not illustrated), and the outer peripheral side stepped portion L6 are not formed is illustrated in FIGS. 6(a) and (b), and the can lid L in a state where the score (not illustrated) and the rivet (not illustrated) are not formed and the outer peripheral side stepped portion L6 is formed is illustrated in FIG. 6(c).

In the outer surface of the can lid L, an irradiated surface (in the present embodiment, the chuck wall portion L2) to which irradiation light from a light-emitting portion 52a described below is applied is in a state where the metal glossy surface of the rolled metal plate is exposed (or a state where a coating that does not block light, such as a transparent coating/ink or transparent resin, is applied) so as to reflect at least a part of the irradiation light (at least at the time of performing a step of detecting a rolling direction of the can lid L using the irradiation light).

Since the can lid L is formed of a rolled metal plate, a large number of roll lines L5 that are fine roughness (roll streaks) extending in the rolling direction are formed on the entire surface of the can lid L including the irradiated surface as illustrated in FIG. 6(b). In FIG. 6(b), the state of roughness of the roll lines L5 is illustrated in a greatly overstated manner.

### Can Lid Manufacturing Device

Next, the can lid manufacturing device 10 of the present embodiment will be described below.

First, the can lid manufacturing device 10 is a device that manufactures the can lid L, and as illustrated in FIGS. 1 and 2, includes a can lid feeder 20 that feeds the can lid L (in the middle of manufacturing) one by one onto a conveying conveyor 30, the conveying conveyor 30 that conveys the can lid L fed from the can lid feeder 20, a can lid processing machine 40 that is installed on the downstream side of the conveying conveyor 30 and performs a variety of processing such as score processing on the can lid L, a rolling direction detection unit 50 for detecting the rolling direction of the can lid L, an inspection machine 60 that is installed on the downstream side of the rolling direction detection unit 50 and detects the orientation of the rolling direction of the can lid with respect to a conveying direction of the can lid, and a control unit (not illustrated).

The can lid feeder 20 is a device that feeds the can lid L onto the conveying conveyor 30, and as illustrated in FIGS. 1 to 4, includes a can lid storage unit 21, a can lid temporary retaining portion 22 formed below the can lid storage unit 21, a plurality of transfer rotating bodies 23 that feed the can lid L downward, a plurality of rotational position maintaining portions 24 for maintaining the rotational position of the can lid L, and a plurality of guide poles 25 that guide the can lid L.

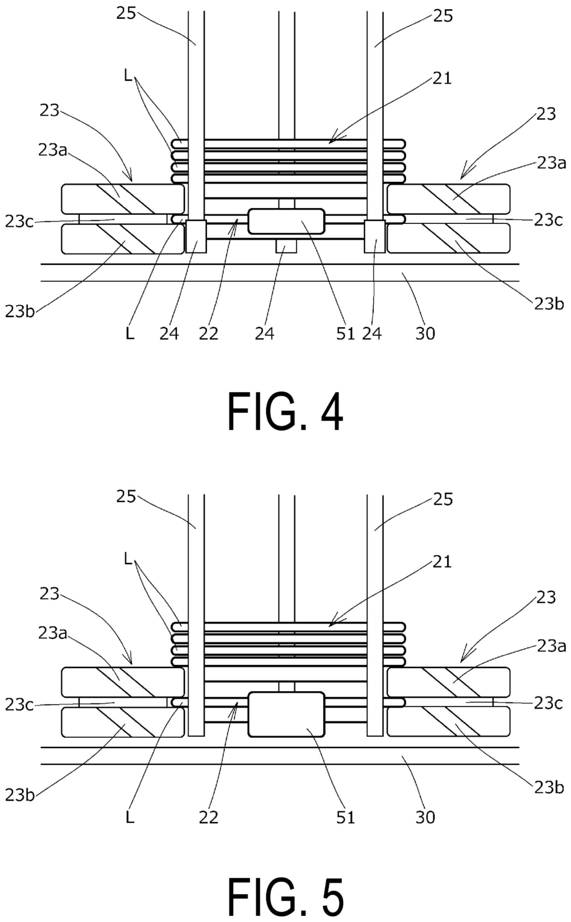

As illustrated in FIGS. 2 and 4, the can lid storage unit 21 is a portion in which a plurality of can lids L are stored in a stacked state.

As illustrated in FIG. 4, the can lid temporary retaining portion 22 is a portion in which one can lid L fed downward from the can lid storage unit 21 is temporarily retained (arranged) below the can lid storage unit 21.

In the present embodiment, as illustrated in FIG. 4, the can lid temporary retaining portion 22 is formed of an outer peripheral recessed portion 23c recessed in an outer peripheral surface of the transfer rotating body 23 in a region between an upper side engagement portion 23a described below (a portion where the upper side engagement portion is formed) and a lower side engagement portion 23b described below (a portion where the lower side engagement portion is formed) in an up-down direction.

The transfer rotating body 23 is provided so as to rotate (spin) about a vertical axis by a drive source such as a motor, feeds (moves) the can lid L downward in accordance with the rotation, and as illustrated in FIG. 4, includes the upper side engagement portion 23a engageable with (the outer peripheral side curled portion L1 of) the can lid L, the lower side engagement portion 23b formed on a lower side of the upper side engagement portion 23a at an interval therewith and engageable with (the outer peripheral side curled portion L1 of) the can lid L, and the outer peripheral surface thereof.

The upper side engagement portion 23a functions as an upper side feeding portion 23a that feeds the lowermost one of the can lids L stored in the can lid storage unit 21 downward toward the can lid temporary retaining portion 22 in accordance with the rotation of the transfer rotating bodies 23.

The lower side engagement portion 23b functions as a lower side feeding portion 23b that feeds one can lid L retained in the can lid temporary retaining portion 22 downward toward the conveying conveyor 30 in accordance with the rotation of the transfer rotating bodies 23.

In the present embodiment, the upper side feeding portion 23a is described as being formed of the upper side engagement portion 23a, but the specific mode of the upper side feeding portion 23a is not limited thereto, and may be configured in any manner as long as the upper side feeding portion can cut out one can lid L from the can lid storage unit 21 and feed the can lid L downward toward the can lid temporary retaining portion 22.

Likewise, in the present embodiment, the lower side feeding portion 23b is described as being constituted by the lower side engagement portion 23b, but the specific mode of the lower side feeding portion 23b is not limited thereto, and may be configured in any manner as long as the lower side feeding portion can feed one can lid L downward from the can lid temporary retaining portion 22 toward the conveying conveyor 30.

In addition, in the present embodiment, the upper side engagement portion 23a and the lower side engagement portion 23b are formed of screw-shaped (spiral) grooves formed on the outer peripheral surface of the transfer rotating body 23, but the specific modes of the upper side engagement portion 23a and the lower side engagement portion 23b are not limited thereto, and the upper and lower side engagement portions may be configured in any manner as long as the can lid L can be fed downward along with the rotation of the transfer rotating bodies 23.

The rotational position maintaining portion 24 is a portion for maintaining the rotational position of the can lid L, that is, preventing the can lid L from rotating when the can lid L is fed from the can lid temporary retaining portion 22 onto the conveying conveyor 30. In the present embodiment, the rotational position maintaining portion 24 is made of an elastic body such as synthetic resin or synthetic rubber, and as illustrated in FIG. 4, comes into contact with (the outer peripheral side curled portion L1 of) the can lid L to maintain the rotational position of the can lid L.

As illustrated in FIG. 4, the guide pole 25 extends in the up-down direction and guides the can lid L when the can lid L is moved in the up-down direction by the transfer rotating bodies 23.

As illustrated in FIGS. 1 and 2, the conveying conveyor 30 conveys the can lid L fed from the can lid feeder 20.

In the present embodiment, the conveying conveyor 30 is configured in a mode using a conveyor belt, but the specific mode of the conveying conveyor 30 may be any mode as long as the can lid L can be conveyed, for example, a mode using a roller conveyor or a vacuum conveyor.

In the present embodiment, the conveying conveyor 30 is configured to feed the can lid L at a pitch (intermittent movement), but the specific mode of the conveying conveyor 30 may be any mode such as a mode that continuously feeds the can lid L.

The can lid processing machine 40 is installed on the downstream side of the can lid feeder 20, and performs a variety of processing such as score processing of forming a score (not illustrated), riveting processing for forming a rivet (not illustrated), and processing of forming the outer peripheral side stepped portion L6 on the can lid L fed by the conveying conveyor 30.

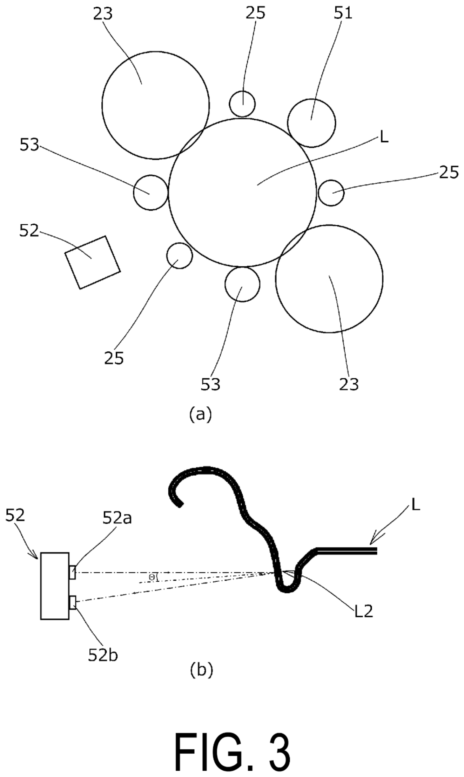

The rolling direction detection unit 50 detects the rolling direction of the can lid L and adjusts the rotation direction of the can lid L, and as illustrated in FIGS. 3 and 4, includes a rotation drive unit 51 that rotates the can lid L, a reflected light detection unit 52, and a plurality of support rollers 53.

The rotation drive unit 51 rotates (spins) the can lid L retained in the can lid temporary retaining portion 22 about the vertical axis, and in the present embodiment, is configured as a drive roller that is driven by a drive source such as a servo motor and can rotate (spin) about the vertical axis.

At least a portion of the rotation drive unit 51, which comes into contact with the can lid L is formed of an elastic body such as urethane.

As described in detail below, the rotation drive unit 51 functions as a part that rotates the can lid L at the time of detecting the rolling direction of the can lid L, and also functions as a rotational position adjusting unit 51 that adjusts the rotational position of the can lid L by positioning and stopping the can lid L at an appropriate rotational position based on rolling direction information of the can lid L obtained by a control unit (not illustrated).

In other words, in the present embodiment, the rotation drive unit 51 and the rotational position adjusting unit 51 are formed of identical equipment (driving roller, drive source) that rotates the can lid L.

The specific modes of the rotation drive unit 51 and the rotational position adjusting unit 51 are not limited to the configuration of the identical equipment, and the rotation drive unit 51 and the rotational position adjusting unit 51 may be formed of different devices.

As illustrated in FIG. 3, the reflected light detection unit 52 includes the light-emitting portion 52a that emits irradiation light (laser light in the present embodiment) to the can lid L retained in the can lid temporary retaining portion 22, and a light receiving-portion 52b that receives and detects reflected light, which is reflected by the can lid L, of the emitted irradiation light.

As illustrated in FIG. 3(b), the light-emitting portion 52a is installed so as to apply irradiation light to the chuck wall portion L2 (inclined so as to expand toward the upper side) of the can lid L from the outer peripheral side.

A portion of the can lid L to which the irradiation light emitted from the light-emitting portion 52a is applied is not limited to the chuck wall portion L2, and may be, for example, the outer peripheral side curled portion L1 or the like.

In the present embodiment, as illustrated in FIG. 3(b), the light-emitting portion 52a is disposed above the light-receiving portion 52b, but the arrangement relationship between the light-emitting portion 52a and the light-receiving portion 52b is not limited thereto, and any arrangement relationship may be adopted as long as at least a part of the irradiation light emitted from the light-emitting portion 52a is reflected by the can lid L and at least a part of the reflected light can be received by the light-receiving portion 52b.

The specific mode of the light-receiving portion 52b may be any mode as long as the light-receiving portion 52b can receive the light reflected by the can lid L and detect the light intensity of the reflected light, for example, a mode including a light-receiving element such as a laser sensor, a mode including an imaging element such as a CCD image sensor, or the like.

As illustrated in FIG. 3, the support rollers 53 guide the rotation of the can lid L in the can lid temporary retaining portion 22, and are each configured as a driven roller rotatable about the vertical axis in the present embodiment.

As illustrated in FIGS. 1 and 2, the inspection machine 60 is installed on the downstream side of the rolling direction detection unit 50, and detects the orientation of the rolling direction of the can lid with respect to the conveying direction, and includes a light irradiation unit that obliquely applies light such as laser light from above to a part of the can lid L (a part of the center panel portion L4 in the present embodiment) conveyed by the conveying conveyor 30, and a camera such as a CCD camera including an imaging element that captures an image of a region including a portion illuminated by irradiation light by the light irradiation unit. The inspection machine 60 detects the orientation of the rolling direction of the can lid L with respect to the conveying direction of the can lid L based on image information that represents the intensity distribution of the reflected light captured by the camera (via a diffuser panel or the like arranged between the can lid L and the imaging element).

Although an inspection target of the can lid L, the rolling direction of which is detected by the inspection machine 60 (that is, a portion to which the irradiation light by the light irradiation unit is applied) is the center panel portion L4 in the present embodiment, another portion may be the inspection target.

The specific mode of the inspection machine 60 may be any mode as long as the inspection machine includes a detection element such as the aforementioned light irradiation unit, the aforementioned imaging element, or a light-receiving element and can detect the rolling direction of the can lid L based on the intensity distribution of the detected reflected light.

The control unit (not illustrated) is formed of a personal computer, a programmable logic controller (PLC), or the like, and is connected to each part of the can lid manufacturing device 10 to control the operation of each part of the can lid manufacturing device 10 and perform a variety of arithmetic processing.

### Can Lid Manufacturing Method

Next, the can lid manufacturing method using the can lid manufacturing device 10 of the present embodiment will be described below.

First, the lowermost one of the can lids L stored in the can lid storage unit 21 is fed to the can lid temporary retaining portion 22 by the upper side feeding portion 23a.

Next, in the can lid temporary retaining portion 22, the rolling direction of the can lid L is detected and adjusted by the rolling direction detection unit 50 and the control unit (not illustrated).

Specifically, first, in the can lid temporary retaining portion 22, while the can lid L is rotated by the rotation drive unit 51, as illustrated in FIG. 3(b), the irradiated surface of the can lid L (the chuck wall portion L2 in the present embodiment) is irradiated with the irradiation light at a predetermined angle Θ from the light-emitting portion 52a, and the light reflected by the irradiated surface of the can lid L is received by the light-receiving portion 52b, and thus the light intensity of the reflected light is detected.

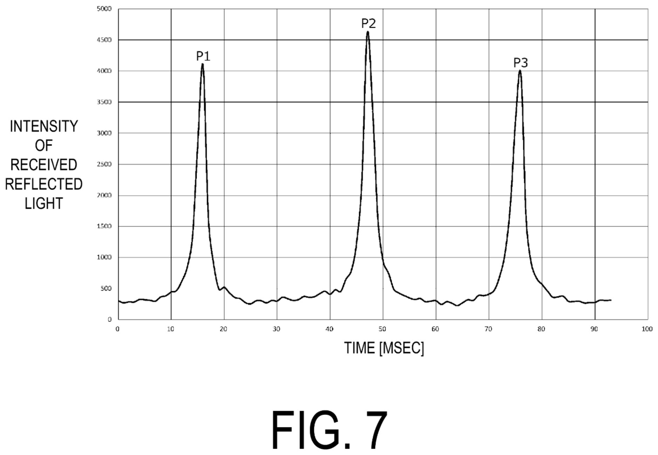

Here, when the can lid L is irradiated with the irradiation light at the predetermined angle Θ, the reflected light is diffused depending on the state of the irradiated surface of the can lid L, and the light-receiving portion 52b receives only a part of the reflected light. In addition, the amount of light received by the light-receiving portion 52b continuously changes in association with the rotation of the can lid L due to a change in state of the irradiated surface of the can lid L (the orientation of the roll lines L5 on the irradiated surface) with the rotation of the can lid L, and specifically, as can be seen from the graph of FIG. 7 and FIG. 6(b), the amount of light continuously changes such that peaks P1, P2, and P3 of the intensity of the reflected light occur every half rotation (180° rotation) of the can lid L.

As illustrated in FIG. 6(b), when the irradiation light is applied to locations P1, P2, and P3 in which the irradiation light is applied perpendicularly to the rolling direction (the direction in which the roll lines L5 extend), the intensity of the reflected light indicates a peak.

Here, P1 to P3 indicated in FIG. 6(b) and P1 to P3 indicated in FIG. 7 correspond to each other, that is, the light intensity when the irradiation light is applied to the location P1 (or P2 or P3) indicated in FIG. 6(b) is represented by reference sign P1 (or P2 or P3) in FIG. 7.

In addition, the rolling direction of the can lid L (the direction in which the roll lines L5 extend) is detected by the control unit (not illustrated) based on change information on continuous change in intensity of the reflected light read by the light-receiving portion 52b (change information shown in FIG. 7).

In order to sufficiently secure the intensity of the reflected light received by the light-receiving portion 52b, it is preferable to install the light-emitting portion 52a with respect to the irradiated surface of the can lid L so that an incident angle Θ of the optical axis of the irradiation light with respect to the irradiated surface of the can lid L (that is, an angle Θ with respect to a perpendicular line perpendicular to the irradiated surface of the can lid L indicated in FIG. 3(b)) is 5 degrees or more and 15 degrees or less, and it is only necessary to set the distance between the irradiated surface of the can lid L and (a light-receiving element of) the light-receiving portion 52b to, for example, 20 mm to 900 mm arbitrarily in accordance with the embodiment.

Next, the rolling direction information of the can lid L which is obtained by the control unit (not illustrated) is fed back to the rotation drive unit 51 functioning as the rotational position adjusting unit 51, and the rotation drive unit (rotational position adjusting unit) 51 positions and stops the can lid L (stops the rotation) at an appropriate rotational position, and thus the rotational position of the can lid L is adjusted.

In the present embodiment, as illustrated in FIG. 1, the rotational position of the can lid L is adjusted so that the rolling direction of the can lid L is orthogonal to the conveying direction of the can lid L by the conveying conveyor 30, but the adjustment mode of the rotational position of the can lid L may be any mode such as a mode in which the rolling direction of the can lid L is adjusted to extend along the conveying direction.

The rotation drive unit (rotational position adjusting unit) 51 is configured to adjust the rotational position of the can lid L to a predetermined rotational position with an accuracy within ± 10° based on the rolling direction information.

Next, the can lid L, the rotational position of which is adjusted in the can lid temporary retaining portion 22 is fed by the lower side feeding portion 23b toward the conveying conveyor 30 thereonto.

In this case, the rotational position of the can lid L fed downward (that is, in the present embodiment, a state where the rolling direction is orthogonal to the conveying direction of the can lid L) is maintained by the rotational position maintaining portions 24.

In the present embodiment, the upper side feeding portion 23a and the lower side feeding portion 23b are formed in the same transfer rotating body 23. Accordingly, at the timing when the can lid L is fed downward by the lower side feeding portion 23b, the lowermost one of the can lids L stored in the can lid storage unit 21 is fed out by the upper side feeding portion 23a and conveyed to the can lid temporary retaining portion 22.

In the above description, after the adjustment of the rotational position of the can lid L by the rotation drive unit (rotational position adjusting unit) 51 is completed in the can lid temporary retaining portion 22, the can lid L is fed toward the conveying conveyor 30 while the rotational position of the can lid L is maintained by the rotational position maintaining portions 24.

However, the adjustment mode of the rotational position of the can lid L by the rotation drive unit (rotational position adjusting unit) 51 or the like is not limited to the above, and it is only necessary to start the adjustment of the rotational position after the rolling direction of the can lid L is detected by the rolling direction detection unit 50 at least in the can lid temporary retaining portion 22, and the adjustment of the rotational position may be completed in accordance with the moment when the can lid L is fed (cut out) by the lower side feeding portion 23b.

In other words, as in a modified example illustrated in FIG. 5, the rotational position of the can lid L may be adjusted with the rotation drive unit (rotational position adjusting unit) 51 in contact with the can lid L during the time from when the can lid L is located in the can lid temporary retaining portion 22 to the moment when the can lid L is fed (cut out) by the lower side feeding portion 23b without installing the rotational position maintaining portions 24. In this case, from the viewpoint of suppressing damage to a contact portion (made of an elastic body) of the rotation drive unit (rotational position adjusting unit) 51 that comes into contact with the can lid L, in the region (time period) in which the can lid L is fed downward by the lower side feeding portion 23b, it is preferable to set the direction in which the can lid L is rotated by the rotation drive unit (rotational position adjusting unit) 51 and the direction in which the can lid L is rotated by the lower side feeding portion 23b to be the same. In addition, it is preferable to set the speed at which the can lid L is rotated by the rotation drive unit (rotational position adjusting unit) 51 and the speed at which the can lid L is rotated by the lower side feeding portion 23b to be nearly equal to each other as much as possible.

Next, the can lid L fed onto the conveying conveyor 30 is conveyed to the downstream side by the conveying conveyor 30, and as illustrated in FIGS. 1 and 2, the orientation of the rolling direction of the can lid with respect to the conveying direction is inspected by the inspection machine 60 installed in the middle of the conveyance path.

Here, when the inspection machine 60 detects the can lid L, the rolling direction of which is not correctly oriented with respect to the conveying direction, the can lid L is rejected from the conveyance path of the conveying conveyor 30 by a rejection machine (not illustrated) on the upstream side or the downstream side (the downstream side in the present embodiment) of the can lid processing machine 40.

Next, the can lid L is conveyed to the can lid processing machine 40 by the conveying conveyor 30, and a variety of processing as score processing, rivet processing, and processing of forming the outer peripheral side stepped portion L6 are performed on the can lid L by the can lid processing machine 40.

Finally, the can lid L processed by the can lid processing machine 40 is conveyed by the conveying conveyor 30 to processing on the downstream side of the can lid processing machine 40.

The can lid manufacturing device 10 of the present embodiment obtained as described above includes the rolling direction detection unit 50 and the control unit (not illustrated). The control unit (not illustrated) is configured to detect the rolling direction of the can lid L based on the change information on a change in light intensity of the reflected light reflected by the rotating can lid L, the change information being obtained by the rolling direction detection unit 50.

Accordingly, the rolling direction of the can lid L can be detected without marking the can lid L with a mark such as printing or a seal, the rotational position (the orientation of the rolling direction) of the can lid L can be adjusted based on the rolling direction information, and a variety of processing such as score processing and processing of forming the outer peripheral side stepped portion L6 can be performed on the can lid L in a state where the rotational position is adjusted. As a result, quality of the can lid L can be improved.

In other words, when a score (not illustrated) is formed in a state where there is variation in rotational position (rolling direction) of the can lid L, the force required for opening the can lid L (breaking the score) varies. However, in the present embodiment, the score processing or the like can be performed on the can lid L in a state where the rotational position is adjusted, and thus the quality of the can lid L regarding the opening force or the like of the can lid L can be improved.

In the present embodiment, the can lid L, the rotational position of which is adjusted, is subjected to processing such as forming a plate material deformed portion (in the present embodiment, the outer peripheral side stepped portion L6) by deforming the plate material of the center panel portion L4 in the thickness direction. Specifically, as illustrated in FIG. 6(c), processing such as forming the plate material deformed portion (in the present embodiment, the outer peripheral side stepped portion L6) is performed so that an imaginary line X passing through a narrow width portion L4a described below (the center of the narrow width portion L4a in a circumferential direction of the can lid in a case where the narrow width portion L4a has a width in the circumferential direction of the can lid) and the center of the center panel portion L4 is parallel or substantially parallel (specifically, within ± 10°) to the rolling direction. As a result, pressure resistance of the can lid L can be improved.

In other words, in the can lid L of the present embodiment, a portion near a location in which the narrow width portion L4a is formed is a portion in which the pressure resistance is lower (than other portions) due to the formation of the plate material deformed portion (the outer peripheral side stepped portion L6 in the present embodiment), and a portion Y illustrated in FIG. 6(c) is a portion in which the pressure resistance strength is lower (than other portions) due to the rolling direction. However, in the can lid L of the present embodiment, the portion (location near the narrow width portion L4a) in which the pressure resistance is lower due to the formation of the plate material deformed portion (the outer peripheral side stepped portion L6 in the present embodiment) and the portion Y in which the pressure resistance is lower due to the rolling direction are not overlapped with each other, and thus a decrease in pressure resistance of the can lid L can be suppressed (the pressure resistance of the can lid L can be improved).

Here, as illustrated in FIG. 6(c), the above-described narrow width portion L4a is a portion in which an interval between the plate material deformed portion (the outer peripheral side stepped portion L6 in the present embodiment) and the outer edge of the center panel portion L4 is the narrowest among portions between at least one plate material deformed portion (the outer peripheral side stepped portion L6 in the present embodiment) and the outer edge of the center panel portion L4.

Although the plate material deformed portion is the outer peripheral side stepped portion L6 in the above description, the plate material deformed portion is not limited to the outer peripheral side stepped portion L6. As with a so-called "finger hooking emboss" or "bead", the plate material deformed portion means a portion in which the plate material of the center panel portion L4 is deformed in the thickness direction, such as a portion in which the plate material of the center panel portion L4 is recessed downward or upward in the thickness direction as illustrated in FIG. 6(d).

When a plurality of plate material deformed portions are formed on the center panel portion L4, the narrow width portion L4a is a portion in which the interval between the plate material deformed portion and the outer edge of the center panel portion L4 is the narrowest among portions between the plate material deformed portions and the outer edge of the center panel portion L4.

The can lid feeder 20 includes the can lid storage unit 21, the can lid temporary retaining portion 22 formed on the lower side of the can lid storage unit 21 and in which one can lid L is retained, the upper side feeding portion 23a configured to feed the can lid L stored in the can lid storage unit 21 to the can lid temporary retaining portion 22, and the lower side feeding portion 23b configured to feed the can lid L retained in the can lid temporary retaining portion 22 toward the conveying conveyor 30. The rolling direction detection unit 50 is installed so as to detect rotational driving and reflected light with respect to the can lid L retained in the can lid temporary retaining portion 22.

Accordingly, the can lid temporary retaining portion 22 formed on the lower side of the can lid storage unit 21 of the can lid feeder 20 is used as a place where the detection of the rolling direction and the determination of the rotational position (adjustment of the rotational position) of the can lid L are performed, and thus complication of the device configuration of the can lid manufacturing device 10 can be avoided.

The transfer rotating body 23 integrally includes the upper side feeding portion 23a that feeds the lowermost one of the can lids L stored in the can lid storage unit 21 downward toward the can lid temporary retaining portion 22 in accordance with the rotation of the transfer rotating bodies 23, and the lower side feeding portion 23b that feeds the can lid L retained in the can lid temporary retaining portion 22 downward toward the conveying conveyor 30 in accordance with the rotation of the transfer rotating bodies 23.

Accordingly, by rotating the transfer rotating bodies 23, both the movement of the can lid L from the can lid storage unit 21 to the can lid temporary retaining portion 22 and the movement of the can lid L from the can lid temporary retaining portion 22 to the conveying conveyor 30 can be performed, and thus complication of the device configuration can be avoided.

The can lid temporary retaining portion 22 is formed of the outer peripheral recessed portion 23c recessed in the outer peripheral surface of the transfer rotating body 23 in the region between the upper side engagement portion 23a and the lower side engagement portion 23b. Thus, complication of the device configuration can be avoided.

The embodiment of the present invention is described in detail above, but the present invention is not limited to the embodiment described above, and various design changes can be made without departing from the scope of the present invention described in the claims. For example, the can lid manufacturing device 10, the can lid manufacturing method, and the like may be configured by arbitrarily combining respective configurations of the above-described embodiment and embodiments and modified examples to be described below.

For example, in the above-described embodiment, the can lid L is described as a can lid including the chuck wall portion L2 and the center panel portion L4. However, the specific mode of the can lid L is not limited to the above-described embodiment, and any mode thereof may be adopted.

### Reference Signs List

10 Can lid manufacturing device
20 Can lid feeder
21 Can lid storage unit
22 Can lid temporary retaining portion
23 Transfer rotating body
23a Upper side engagement portion (upper side feeding portion)
23b Lower side engagement portion (lower side feeding portion)
23c Outer peripheral recessed portion
24 Rotational position maintaining portion
25 Guide pole
30 Conveying conveyor
40 Can lid processing machine
50 Rolling direction detection unit
51 Rotation drive unit (rotational position adjusting unit)
52 Reflected light detection unit
52a Light-emitting unit
52b Light-receiving unit
53 Support roller
60 Inspection machine
L Can lid
L1 Outer peripheral side curled portion
L2 Chuck wall portion
L3 Panel wall portion
L4 Center panel portion
L4a Narrow width portion
L5 Roll line
L6 Outer peripheral side stepped portion (plate material deformed portion)

## Claims

1. A can lid manufacturing device configured to manufacture a can lid, the can lid manufacturing device comprising:
a rolling direction detection unit including a rotation drive unit configured to rotate the can lid and a reflected light detection unit; and
a control unit, wherein
the reflected light detection unit includes
a light-emitting unit configured to irradiate the can lid with irradiation light, and
a light-receiving unit configured to receive reflected light reflected by the can lid, of the irradiation light, and
the control unit is configured to detect a rolling direction of the can lid based on change information on a change in light intensity of the reflected light reflected by the can lid to rotate, the change information being obtained by the rolling direction detection unit.

2. The can lid manufacturing device according to claim 1, wherein
the rolling direction detection unit further includes a rotational position adjusting unit configured to adjust a rotational position of the can lid based on rolling direction information of the can lid, the rolling direction information being obtained by the control unit.

3. The can lid manufacturing device according to claim 2, wherein
the rotation drive unit and the rotational position adjusting unit are formed of identical equipment configured to rotate the can lid.

4. The can lid manufacturing device according to claim 1, further comprising:
a can lid feeder configured to feed a can lid onto a conveying conveyor, wherein
the can lid feeder includes
a can lid storage unit in which a plurality of can lids are stored in a stacked state,
a can lid temporary retaining portion which is formed on a lower side of the can lid storage unit and in which one can lid is retained,
an upper side feeding portion configured to feed the can lid stored in the can lid storage unit to the can lid temporary retaining portion, and
a lower side feeding portion configured to feed the can lid retained in the can lid temporary retaining portion toward the conveying conveyor, and
the rolling direction detection unit is installed to detect the reflected light with respect to the can lid retained in the can lid temporary retaining portion.

5. The can lid manufacturing device according to claim 4, wherein
the can lid feeder includes a transfer rotating body rotatable about a vertical axis,
the transfer rotating body includes, on an outer peripheral surface,
an upper side engagement portion engageable with the can lid, and
a lower side engagement portion engageable with the can lid formed on a lower side of the upper side engagement portion,
the upper side engagement portion functions as the upper side feeding portion configured to feed the can lid stored in the can lid storage unit to the can lid temporary retaining portion in accordance with rotation of the transfer rotating body, and
the lower side engagement portion functions as the lower side feeding portion configured to feed the can lid retained in the can lid temporary retaining portion toward the conveying conveyor in accordance with rotation of the transfer rotating body.

6. The can lid manufacturing device according to claim 5, wherein
the can lid temporary retaining portion is formed of an outer peripheral recessed portion recessed in an outer peripheral surface of the transfer rotating body in a region between the upper side engagement portion and the lower side engagement portion.

7. The can lid manufacturing device according to claim 4, wherein
the rolling direction detection unit further includes a rotational position adjusting unit configured to adjust a rotational position of the can lid based on rolling direction information of the can lid, which is obtained by the control unit, and
the rotational position adjusting unit is configured to start adjustment of the rotational position of the can lid at least in the can lid temporary retaining portion.

8. The can lid manufacturing method according to claim 7, wherein
the rotational position adjusting unit is configured to adjust the rotational position of the can lid to a predetermined rotational position with an accuracy within ± 10°.

9. The can lid manufacturing device according to claim 1, wherein
the light-emitting unit of the reflected light detection unit is installed to apply irradiation light to a chuck wall portion of the can lid from an outer peripheral side.

10. The can lid manufacturing device according to claim 1, further comprising:
an inspection machine installed on a downstream side of the rolling direction detection unit and configured to detect an orientation of the rolling direction of the can lid with respect to a conveying direction of the can lid.

11. A can lid manufacturing method for manufacturing a can lid, the can lid manufacturing method comprising:
a rolling direction detection unit including a rotation drive unit configured to rotate the can lid and a reflected light detection unit; and
a control unit, wherein
the reflected light detection unit includes
a light-emitting unit configured to irradiate the can lid with irradiation light, and
a light-receiving unit configured to receive reflected light reflected by the can lid, of the irradiation light, and
the control unit detects the rolling direction of the can lid based on change information on a change in light intensity of the reflected light reflected by the can lid to rotate, the change information being obtained by the rolling direction detection unit.

12. A can lid manufactured by the can lid manufacturing method according to claim 11.

13. The can lid according to claim 12, comprising:
a center panel portion, wherein
at least one plate material deformed portion obtained by deforming a plate material in a thickness direction is formed in the center panel portion,
the center panel portion includes a narrow width portion that is a portion in which a distance between the plate material deformed portion and an outer edge of the center panel portion is narrowest among portions between the at least one plate material deformed portion and the outer edge of the center panel portion, and
the can lid is formed such that an imaginary line passing through the narrow width portion and a center of the center panel portion is parallel or substantially parallel to the rolling direction.

14. A can container containing contents, comprising:
the can lid according to claim 12; and
a can barrel in which contents are filled and to which the can lid is seamed.
